# EUROPÄISCHE PATENTSCHRIFT

(11) **EP 0 582 913 B1**
(45) Veröffentlichungstag und Bekanntmachung des Hinweises auf die Patenterteilung: **22.01.1997**
(21) Anmeldenummer: 93112201.4
(22) Anmeldetag: 29.07.1993
(51) Int. Cl.: H02H 7/18, H02J 7/00

(54) **Schaltungsvorrichtung**
Switching device
Dispositif de commutation

(30) Priorität: 04.08.1992 DE 4225746
(43) Veröffentlichungstag der Anmeldung: 16.02.1994
(73) Patentinhaber: HAGEN BATTERIE AG, D-59494 Soest/Westfalen (DE)
(72) Erfinder: Rühling, Klaus, Dr., D-34277 Fuldabrück (DE)
(74) Vertreter: Finsterwald, Manfred, Dipl.-Ing., Dipl.-Wirtsch.-Ing.

(56) Entgegenhaltungen:
- EP-A- 0 372 823
- DE-A- 3 533 437
- US-A- 4 061 955
- US-A- 4 238 721
- US-A- 4 871 956

## Beschreibung

Die Erfindung betrifft eine Schaltungsvorrichtung zur Ladeüberwachung für zumindest zwei miteinander in Reihe an eine Ladestromquelle angeschlossene elektrische Akkumulatoren oder Akkumulatorzellen nach dem Oberbegriff des Anspruchs 1.

Eine solche Vorrichtung ist aus der US-A-4 238 721 bekannt.

Werden zwei oder mehr Akkumulatoren in Reihe geschaltet und wird diese Reihenschaltung insbesondere beim Aufladen als Einheit behandelt, so können dabei Probleme auftreten, die zu frühzeitigen Ausfällen der Akkumulatoren führen. Diese Probleme sind darauf zurückzuführen, daß infolge von Fertigungstoleranzen jeder Akkumulator ihm eigene elektrische, chemische und thermische Eigenschaften aufweist.

Insbesondere können infolge der Exemplarstreuungen beim Aufladen der Akkumulatoren unterschiedliche Ladeschlußströme und durch die Gerätekonstruktion bedingte unterschiedliche Akkumulatortemperaturen auftreten, die zu unterschiedlichen Ladezuständen der Akkumulatoren und zur Überladung einzelner Akkumulatoren führen können, wenn die Reihenschaltung der Akkumulatoren als Einheit identischer Akkumulatoren behandelt wird.

Daneben treten auch beim Entladen der Akkumulatoren Probleme auf, da einzelne Akkumulatoren oder Akkumulatorzellen nicht die geforderte Kapazität zur Verfügung stellen oder stellen können. Derartige Akkumulatoren oder Akkumulatorzellen können dabei durch Tiefentladung oder durch Umpolen geschädigt werden.

Diese Probleme führen insbesondere bei verschlossenen Akkumulatoren, z.B. bei sog. drysafe-Akkumulatoren zu Ausfällen, weil bei diesen kein Wasser nachgefüllt werden kann.

Um beim Laden von Akkumulatoren auftretende Probleme zu vermeiden, sind verschiedene Schaltungsvorrichtungen insbesondere zur Ladeüberwachung entwickelt worden.

Beim Thermoguard-System der Firma Hagen Batterie AG wird beim Laden eines einzelnen Akkumulators die aktuelle Temperatur des Akkumulators erfaßt und an ein Ladegerät übermittelt. Im Ladegerät ist eine elektrische Regelschaltung vorgesehen, die in Abhängigkeit von der aktuellen Akkumulatortemperatur den Ladestrom und damit den Ladeverlauf eines Akkumulators anpaßt. Mittels der ständigen Temperaturüberwachung läßt sich der Ladeverlauf für einen Akkumulator optimieren, so daß er in kürzester Zeit schonend geladen werden kann, ohne daß Schäden infolge eines zu hohen Ladestromes oder einer überladung zu befürchten sind.

Für eine Reihenschaltung von mehreren Akkumulatoren, die gleichzeitig geladen werden sollen, ist dieses System jedoch nicht ohne weiteres geeignet.

Bei einer anderen auf dem Markt befindlichen Schaltungsvorrichtung zur Überwachung der Verfügbarkeit einer stationären Akkumulatoranlage wird der gleichmäßige Vollade-Zustand aller Akkumulatoren oder Akkumulatorzellen der Akkumulatoranlage im Ladeerhaltungsbetrieb überwacht. Außerdem werden durch eine Temperaturüberwachung mehrerer Akkumulatoren oder Akkumulatorzellen unzulässig hohe Akkumulatortemperaturen festgestellt.

Beim Entladebetrieb werden die Akkumulatoren oder Akkumulatorzellen dahingehend überwacht, ob der Entladeschluß unterschritten wird, oder ob sich einzelne Akkumulatoren oder Akkumulatorzellen sogar soweit entladen, daß die Gefahr einer Umpolung besteht.

Die jeweils erfaßten Störereignisse werden bei dieser bekannten Schaltung gespeichert und in geeigneter Weise angezeigt. Bei Störungen, die unmittelbar zu Schäden an der Akkumulatoranlage führen können, wird ein entsprechendes akustisches Alarmsignal abgegeben.

Eine Steuerung des Ladegerätes ist dabei nicht vorgesehen.

Bei einer weiteren auf dem Markt befindlichen Steuerschaltung für ein Ladegerät für Akkumulatoren wird die Akkumulatortemperatur und dessen Klemmenspannung von der auf dem Akkumulator angeordneten Steuerschaltung erfaßt, die einen Ein-Aus-Betrieb des Ladegerätes bewirkt. Aus der Temperatur wird von einem Temperatur-Spannungs-Konverter ein der optimalen Klemmenspannung bei der erfaßten Temperatur entsprechendes Spannungssignal gebildet und mit der erfaßten Klemmenspannung verglichen. Solange die Klemmenspannung geringer ist als die optimale Spannung wird der von einem Ladegerät oder von einem geeigneten Generator, z.B. in einem Kraftfahrzeug, gelieferte Ladestrom eingeschaltet. Erreicht die Akkumulatorklemmenspannung den optimalen Wert, wird der Ladestrom abgeschaltet.

Für eine Reihenschaltung von zwei oder mehr Akkumulatoren ist diese Vorrichtung allerdings nicht geeignet.

Eine weitere auf dem Markt erhältliche Schaltungsvorrichtung umfaßt für jede Akkumulatorzelle eine unabhängige Reglerschaltung mit einer Nebenschlußleitung aus Widerstand und Transistor. Der Transistor wird dabei von einer Steuerschaltung beaufschlagt, die die jeweilige Zellenspannung während eines Ladeerhaltungsbetriebes erfaßt und in Abhängigkeit davon den Widerstand der Nebenschlußleitung so einstellt, daß der jeweils benötigte Ladeerhaltungsstrom durch die jeweilige Zelle fließt.

Diese Schaltungsvorrichtung schützt zwar jede Akkumulatorzelle vor zu hohen Ladeerhaltungsströmen, sie ist jedoch nicht in der Lage, das für den Lade- oder Ladeerhaltungsbetrieb benötigte Ladegerät zu steuern.

Auch die US-A-4,238,721 betrifft das Aufladen von in Reihe geschalteten Akkumulatorzellen, bei der eine Reduzierung des insgesamt zugeführten Ladestroms bereits dann veranlaßt wird, wenn eine einzige Zelle als erste eine voreingestellte Referenzspannung erreicht. Infolgedessen werden die anderen Zellen im weiteren Verlauf mit einem unnötigerweise niedrigen Ladestrom geladen, was zu einer unvollständigen Aufladung dieser Zellen führen kann.

Der Erfindung liegt die Aufgabe zugrunde, eine Vorrichtung zur Ladeüberwachung zu schaffen, die eine möglichst effektive und gleichzeitig individuelle und schonende Volladung einzelner Akkumulatoren oder Akkumulatorzellen in Reihenschaltung gewährleistet.

Diese Aufgabe wird erfindungsgemäß durch die Merkmale des kennzeichnenden Teils von Anspruch 1 gelöst.

Erfindungsgemäß ist also für jeden einzelnen Akkumulator oder für jede einzelne Akkumulatorzelle ein Überwachungsmodul vorgesehen, mittels dessen der jeweilige Ladestrom individuell auf einen zulässigen optimalen Wert begrenzt wird. Gleichzeitig wird eine erfolgte Ladestrombegrenzung über ein Steuersignalschaltung erfaßt, die die Ladestromquelle, also ein Ladegerät oder eine einen Ladestrom liefernde Generatorschaltung zur Verringerung des angebotenen Ladestroms jedoch nur dann beaufschlagt, wenn eine Ladestrombegrenzung an allen Akkumulatoren oder Akkumulatorzellen vorgenommen ist.

Gemäß der Erfindung bewirkt die Verwendung der UND-Schaltung für die den Betriebszustand der Ladestrombegrenzungsschaltungen der Überwachungsmodule anzeigenden Signale, daß das Ladegerät oder eine andere Ladestromquelle den vollen Ladestrom solange zur Verfügung stellt, wie er von einem einzelnen Akkumulator oder einer einzelnen Akkumulatorzelle noch ohne Gefahr einer Schädigung genutzt werden kann. Sobald für alle Akkumulatoren oder Akkumulatorzellen eine Ladestrombegrenzung erforderlich ist, wird der von der Ladestromquelle bereitgestellte Ladestrom soweit herabgeschaltet, bis zumindest ein Akkummulator bzw. eine Akkumulatorzelle den verminderten Ladestrom wieder voll nutzen kann.

Der Grad der Ladestromverringerung sollte so sein, daß der die geringste Ladestrombegrenzung erfordernde Akkumulator bzw. die betreffende Zelle gerade soviel Strom erhält, daß hier dann keine Ladestrombegrenzung mehr erforderlich ist. Dadurch wird der Energieaufwand minimiert und gleichzeitig auch eine sonst mögliche Überlastung der Ladestrombegrenzungsschaltungen verhindert.

Durch die Verwendung einer erfindungsgemäßen Schaltungsvorrichtung an einer Reihenschaltung von Akkumulatoren oder Akkumulatorzellen lassen sich Ladegeräte mit einem vereinfachten Aufbau einsetzen.

Aufgrund der mittels der erfindungsgemäßen Schaltungsvorrichtung erzielten schonenden und schnellen Ladung der Akkumulatoren lassen sich an diesen Schäden verhindern, so daß deren Lebensdauer erhöht wird.

Der Einsatz der Schaltungsvorrichtung in Elektrofahrzeugen, in denen häufig beim Bremsen Strom in die Akkumulatoren zurückgespeist wird, ermöglicht die Steuerung des speisenden Generators, so daß auch bei einer Schnelladung durch den in die Akkumulatoren zurückgespeisten Strom kein Überladen der Akkumulatoren auftritt.

Um eine temperaturgeführte Ladestrombegrenzung auf besonders zweckmäßige Weise zu erhalten, sind die Ausführungsbeispiele nach den Ansprüchen 2 bis 4 vorgesehen.

Entsprechend den Ansprüchen 5 bis 7 erfolgt die Ladestrombegrenzung in einfacher Weise dadurch, daß zuviel angebotener Ladestrom über eine Nebenschlußleitung an dem jeweiligen Akkumulator bzw. der Akkumulatorzelle vorbeigeleitet wird.

Um Überströme in der Schaltungsvorrichtung und damit deren unzulässige Erwärmung zu vermeiden, sind die Ausführungsbeispiele nach Anspruch 8 und 9 vorgesehen.

In besonders vorteilhafter Weise läßt sich die erfindungsgemäße Schaltungsvorrichtung auch zur Entladeüberwachung einsetzen, wenn sie gemäß einem der Ansprüche 10 bis 13 ausgebildet wird.

Die Ausgestaltungen der Erfindung nach den Ansprüchen 14 und 15 hat den Vorteil, daß die erfindungsgemäße Schaltungsvorrichtung potentialfreie Signale zur Steuerung der Ladestromquelle zur Verfügung stellt.

Dabei kann entsprechend den Ansprüchen 16 bis 17 die Steuersignalschaltung als Logikschaltung aufgebaut sein.

Die zweiten Steuersignale, die beim Ladebetrieb einen Überstrom in der Strombegrenzungsschaltung und im Entladebetrieb die Gefahr einer Tiefentladung anzeigen, werden dabei zur Steuerung der Ladestromquelle bzw. zur Beaufschlagung einer Entladeüberwachungsschaltung über eine ODER-Schaltung miteinander verknüpft, so daß bereits ein vorliegendes Signal die mögliche Schädigung des entsprechenden Überwachungsmoduls bzw. eines Akkumulators oder einer Akkumulatorzelle anzeigt.

Die Erfindung wird im folgenden beispielsweise anhand der Zeichnung näher beschrieben; in dieser zeigt:
- Fig. 1: ein schematisches Blockschaltbild einer Schaltungsvorrichtung zur Lade- und Entladeüberwachung von in Reihe geschalteten elektrischen Akkumulatoren,
- Fig. 2: ein schematisches Schaltbild der Anschlüsse eines Überwachungsmoduls an einem Akkumulator und
- Fig. 3: ein schematisches Schaltbild des Überwachungsmoduls.

In den verschiedenen Figuren der Zeichnung sind einander entsprechende Bauteile mit gleichen Bezugszeichen bezeichnet.

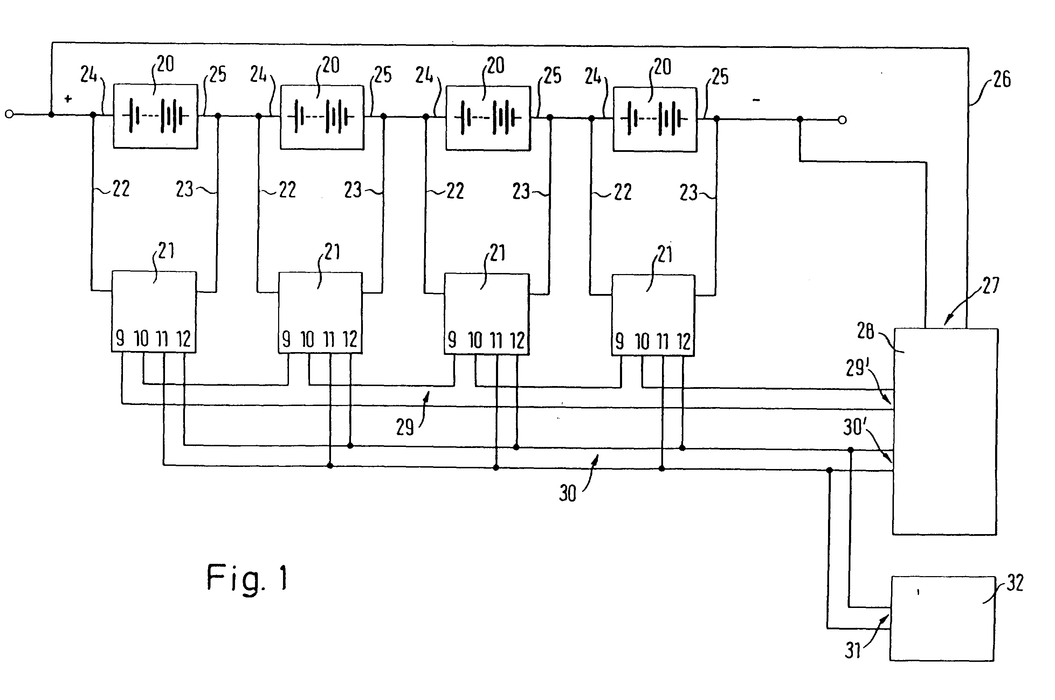

Wie Fig. 1 zeigt, ist jedem von z.B. vier in Reihe geschalteten Akkumulatoren 20 ein Überwachungsmodul 21 zugeordnet, wobei die Überwachungsmodule 21 jeweils über Signalleitungen 22, 23 mit den jeweiligen positiven bzw. negativen Anschlüssen 24 bzw. 25 der Akkumulatoren 20 verbunden sind.

Die Reihenschaltung der Akkumulatoren 20 ist über Leitungen 26 mit einem Ladeausgang 27 eines Ladegeräts 28 verbunden.

Die Überwachungsmodule 21 weisen jeweils erste Signalausgänge 9, 10 auf, an denen ein potentialfreies Signal gesetzt werden kann und die über eine erste Steuersignalschaltung 29 miteinander in Reihe geschaltet an einen ersten Signaleingang 29' des Ladegeräts 28 angeschlossen sind. Ein zweiter Signaleingang 30' des Ladegeräts 28 ist über eine zweite steuersignalschaltung 30 mit zweiten Signalausgängen 11, 12 der Überwachungsmodule verbunden, an denen ein zweites potentialfreies Signal gesetzt werden kann und die zueinander parallel geschaltet sind. Die zweiten Signalausgänge 11, 12 sind außerdem über die zweite Steuersignalschaltung 30 mit einem Signaleingang 31 einer Entladeüberwachungsschaltung 32 verbunden.

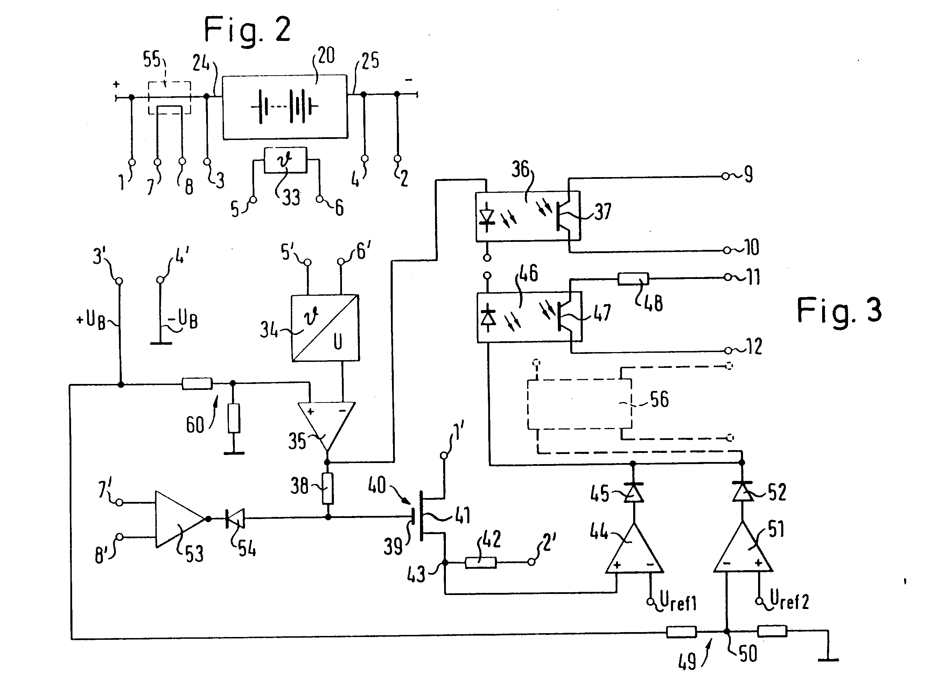

Der Aufbau eines Überwachungsmoduls 21 und sein Anschluß an einen Akkumulator 20 wird im folgenden anhand von Fig. 2 und 3 näher erläutert. Jedes Überwachungsmodul 21 weist zur Ermittlung der Temperatur des zugeordneten Akkumulators 20 einen am Akkumulator 20 angeordneten Temperaturfühler 33 auf, dessen Anschlußklemmen 5, 6 mit den Anschlußklemmen 5', 6' eines Temperatur-Spannungswandlers 34 verbunden sind. Ein temperaturabhängiges Spannungssignal wird von dem Temperatur-Spannungs-Wandler 34 an den invertierenden Eingang eines Komparators 35 angelegt. Der nichtinvertierende Eingang des Komparators 35 ist an den Mittelabgriff eines Spannungsteilers 60 angeschlossen, der zwischen die Anschlußklemme 3', die mit der Anschlußklemme 3 am positiven Anschluß 24 des Akkumulators 20 verbunden ist, und Masse geschaltet ist, so daß eine der positiven Akkumulatorspannung +U_{B} entsprechende Spannung am nichtinvertierenden Eingang anliegt. Der Signalausgang des Komparators 35 ist direkt an einen Eingang eines ersten als Signalgeber dienenden Optokopplers 36 angelegt, dessen Phototransistor 37 die ersten Signalausgänge 9, 10 des Überwachungsmoduls 21 miteinander verbindet. Anstelle eines Optokopplers kann als Signalgeber 36 auch ein anderer galvanisch trennender Signalgeber, z.B. ein magnetischer Koppler mit einer Spule und einem magnetfeldabhängigen Widerstand vorgesehen sein.

Der Ausgang des Komparators 35 ist weiter über einen Widerstand 38 an einen Steuereingang 39 eines Regelbauteils mit Ansteuerschaltung, z.B. eines Leistungs-Feldeffekttransistors 40 angeschlossen.

Die Leitungsstrecke 41 des Leistungs-Feldeffekttransistors 40 ist mit einem Widerstand 42 in Reihe zwischen Anschlußklemmen 1', 2' geschaltet, von denen die eine mit einer Anschlußklemme 1 und die andere mit einer Anschlußklemme 2 am positiven bzw. negativen Anschluß 24 bzw. 25 des Akkumulators 20 verbunden ist.

Auf diese Weise wird eine Regelstrecke mit einer Nebenschlußleitung 41, 42 geschaffen, mittels der der vom Ladegerät 28 zuviel angebotene Strom an dem Akkumulator 20 vorbeigeleitet werden kann. Hierzu vergleicht der Komparator 35 eine der am positiven Anschluß 24 des Akkumulators 20 vorliegende Spannung U_{B} entsprechende Spannung mit einem temperaturabhängigen Spannungssignal und liefert ein Ausgangssignal an den Steuereingang 39 des Leistungs-Feldeffekttransistors 40, wenn die der am positiven Anschluß 24 des Akkumulators 20 vorliegenden Spannung U_{B} entsprechende Spannung größer ist als das temperaturabhängige Spannungssignal, und bewirkt damit, daß die Leitungsstrecke 41 des Feldeffekttransistors 40 leitend wird, so daß der Ladestrom über die Nebenschlußleitung (40, 42) an den Akkumulator 20 vorbeifließt. Hierbei ist es wichtig, daß der Ladestrom über Leitungen am Akkumulator 20 vorbeigeleitet wird, die nicht identisch mit den Meßleitungen zum Abgriff der Akkkumulatorspannung sind.

Aus thermischen Gründen kann dabei der Leistungs-Feldeffekttransistor 40 auch außerhalb des Moduls 21 angeordnet werden. Dadurch wird eine mögliche Erwärmung der übrigen Elektronik durch den Leistungs-Feldeffekttransistor vermieden.

Das gleichzeitig am Optokoppler 36 anliegende Ausgangssignal des Komparators 35 bewirkt dabei, daß auch die KollektorEmitter-Strecke des Phototransistors 37 leitend wird. Hierdurch wird ein potentialfreies Signal an den ersten Signalausgängen 9, 10 gesetzt.

Tritt dieser Regelfall in allen Überwachungsmodulen 21 auf, wird also in allen Überwachungsmodulen 21 der vom Ladegerät 28 zuviel angebotene Strom an den Akkumulatoren 20 vorbeigeleitet, und sind demzufolge an allen ersten Signalausgängen 9, 10 der Überwachungsmodule 21 die potentialfreien Signale gesetzt, so liegt über die erste Steuersignalschaltung 29 ein entsprechendes Steuersignal am Signaleingang 29' des Ladegeräts 28 an und der vom Ladegerät 28 gelieferte Strom wird soweit heruntergeschaltet, bis eines dieser ersten potentialfreien Signale zurückgesetzt ist.

Mit einer fest verdrahteten UND-Schaltung wird demnach bewirkt, daß der vom Ladegerät 28 angebotene Ladestrom solange auf einem relativ hohen Pegel gehalten wird, wie dieser Strom zum Laden zumindest eines Akkumulators 20 erforderlich ist.

Um die Nebenschlußleitung über den Leistungs-Feldeffekttransistor 41 und den Widerstand 42, und damit das Überwachungsmodul 21 vor zu hohen Strömen und damit vor zu hohen Temperaturen zu schützen, wird am Verbindungspunkt 43 zwischen dem Feldeffekttransistor 40 und dem Strombegrenzungswiderstand 42 eine Spannung abgegriffen, die an den nichtinvertierenden Eingang eines zweiten Komparators 44 angelegt ist, an dessen invertierenden Eingang eine Referenzspannung U_{ref1} anliegt. Das Ausgangssignal des zweiten Komparators 44 ist über eine Diode 45 an einen Eingang eines zweiten als galvanisch trennender Signalgeber dienenden Optokopplers 46 angelegt, dessen Phototransistor 47 mit seiner Kollektor-Emitter-Strecke zwischen die zweiten Signalausgänge 11, 12 des Überwachungsmoduls geschaltet ist. Übersteigt die am Verbindungspunkt 43 abgegriffene Spannung die Referenzspannung U_{ref1} so wird die Kollektor-Emitter-Strecke des Phototransistors 47 leitend und das Ladegerät 28 erfaßt an seinem zweiten, mit der zweiten Steuersignalschaltung 30 verbundenen Signaleingang 30' ein entsprechendes Steuersignal und stellt damit fest, daß wenigstens in einem Überwachungsmodul 21 ein Überstrom aufgetreten ist, also ein Ladestrom, der den maximal zulässigen Strom über den Leistungs-Feldeffekttransistor übersteigt.

In diesem Fall schaltet das Ladegerät 28 den angebotenen Ladestrom sofort stufenweise zurück, bis der Überstrom abgebaut ist. Durch die Parallelschaltung der einzelnen zweiten Signalausgänge 11, 12 und damit der diese verbindenden Phototransistoren 47 durch die zweite Steuersignalschaltung 30 wird eine verdrahtete ODER-Schaltung erhalten. Um festzustellen, an welchem der einzelnen Akkumulatoren 20 im Überwachungsmodul 21 ein Überstrom aufgetreten ist, kann zwischen den Phototransistor 47 und z.B. den zweiten Signalausgang 11 ein Widerstand 48 in Reihe zur Kollektor-Emitter-Strecke des Phototransistors 47 geschaltet werden, wobei die einzelnen Widerstände der Überwachungsmodule 21 unterschiedliche Widerstandswerte aufweisen, also gewichtet sind.

Um beim Entladebetrieb der Akkumulatoren 20 jeden einzelnen Akkumulator 20 auf eine schädigende Tiefentladung hin zu überwachen, ist zwischen die Masse des Überwachungsmoduls 21, die über eine Anschlußklemme 4' und eine damit verbundene Anschlußklemme 4 mit dem negativen Anschluß 25 des Akkumulators verbunden ist, und die mit der positiven Akkumulatorspannung beaufschlagte Anschlußklemme 3' ein Spannungsteiler 49 geschaltet, dessen Mittelabgriff 50 an einem invertierenden Eingang eines dritten Komparators 51 angeschlossen ist, an dessen nichtinvertierenden Eingang eine Referenzspannung U_{ref2} anliegt. Das Ausgangssignal des dritten Komparators 51 ist über eine Diode 52 an den Optokoppler 46 angelegt.

Sinkt beim Entladebetrieb die Spannung an einem Akkumulator unter einen kritischen Wert ab, der beispielsweise bei 12 V Akkumulatoren bei 10,2 V liegen kann, jedoch den jeweiligen gegebenen Besonderheiten anzupassen ist, so wird dies vom Komparator 51 erfaßt und über das vom Optokoppler 46 erzeugte potentialfreie Signal an die Entladeüberwachungsschaltung 32 gemeldet.

Die Entladeüberwachungschaltung 32 bewirkt beim Auftreten einer Unterspannung entweder eine Reduktion des maximal erlaubten Entladestromes oder ein Trennen der Last von den Akkumulatoren.

Mit der Steuerelektrode 39 des Feldeffekttransistors 40 ist ein Ausgang eines vierten Komparators 53 über eine Diode 54 verbunden, die mit ihrer Anode mit dem Steuereingang 39 verbunden ist. Die Eingänge des vierten Komparators 53 sind über Anschlußklemmen 7', 8' an entsprechende Anschlußklemmen 7, 8 eines Stromfühlers 55 angeschlossen, der im Bereich des positiven Anschlusses 24 des Akkumulators 20 den Lade- oder Entladestrom durch den jeweiligen Akkumulator 20 erfaßt. Hierdurch wird also die Stromrichtung erkannt, so daß im Ladebetrieb eine Entladung des Akkumulators 20 über die Nebenschlußleitung 40, 42 verhindert wird.

Die beschriebene Vorrichtung zur Lade- und Entladeüberwachung kann auch in Elektrofahrzeugen verwendet werden, in denen zum Antrieb eines Elektromotors eine Vielzahl von Akkumulatoren in Reihe geschaltet sind. In derartigen Elektrofahrzeugen wird häufig der Elektromotor beim Bremsen als Generator betrieben, so daß dabei Strom in die Akkumulatoren zurückgespeist wird. Wird dieser beim Bremsen gelieferte Strom, der Rekuperationsstrom, nicht begrenzt, können die Akkumulatoren überladen werden, wodurch Schäden auftreten können.

Insbesondere hierbei ist es auch möglich, das Ausgangssignal des dritten Komparators 51 an einen in Fig. 3 gestrichelt dargestellten dritten galvanisch trennenden Signalgeber 56 anzulegen, der dann das Auftreten einer Unterspannung anzeigt, so daß die Unterscheidung, ob ein Überstrom beim Ladebetrieb oder ob eine Unterspannung beim Entladebetrieb vorliegt, erleichtert wird. Dies ist insbesondere dann von Vorteil, wenn die beschriebene Schaltung in einem akkumulatorgetriebenen Fahrzeug eingesetzt wird, bei dessen Fahrbetrieb Lade- bzw. Entladebetrieb infolge wechselnden Beschleunigungs- bzw. Bremsbetriebs abwechselnd auftreten.

Bei Verwendung der beschriebenen Vorrichtung können Schäden beim Ladebetrieb dadurch verhindert werden, daß der als Generator betriebene Elektromotor bzw. ein diesem zugeordneter Bremsregler von den Ausgangssignalen der Überwachungsmodule gesteuert wird, so daß die Gefahr einer Schädigung der Akkumulatoren beim Bremsen infolge von Überladung beseitigt ist.

Wird im Entladebetrieb eine Schädigung der Akkumulatoren im Falle einer Unterspannung durch ein Trennen der Akkumulatoren von der Last verhindert, so muß eine "Not-Ein"-Schaltung vorgesehen sein, insbesondere bei Verwendung der beschriebenen Schaltung in einem Elektrofahrzeug, damit dieses nicht an einer Gefahrenstelle stehen bleibt.

## Patentansprüche

1. Schaltungsvorrichtung zur Ladeüberwachung für zumindest zwei miteinander in Reihe an eine Ladestromquelle (28) angeschlossene elektrische Akkumulatoren (20) oder Akkumulatorzellen, mit je einem Überwachungsmodul (21) für jeden zu überwachenden Akkumulator (20) oder für jede Akkumulatorzelle, wobei jedes Überwachungsmodul (21) eine Ladestrombegrenzungsschaltung (40, 42) und einen ersten Signalgeber (36) zur Anzeige des Betriebszustandes der Ladestrombegrenzungsschaltung (40, 42) aufweist, und mit einer mit den ersten Signalgebern (36) verbundenen Steuersignalschaltung (29), deren Ausgangssignal an die Ladestromquelle (28) angelegt ist, um den von ihr gelieferten Ladestrom zu steuern,
**dadurch gekennzeichnet,**
daß die Ladestrombegrenzungsschaltung (40, 42) in Abhängigkeit von einem der Temperatur des Akkumulators (20) oder Akkumulatorzelle entsprechenden Temperatursignal beaufschlagt ist, und
daß die Steuersignalschaltung (29) eine UND-Schaltung ist.

2. Schaltungsvorrichtung nach Anspruch 1, wobei jeder Ladestrombegrenzungsschaltung (40, 42) eine erste Komparatorschaltung (34, 35) zugeordnet ist, der das Temperatursignal und die an einem Akkumulatoranschluß (24) vorliegende Spannung zugeführt ist.

3. Schaltungsvorrichtung nach Anspruch 2, wobei das Temperatursignal über einen Temperatur-Spannungs-Wandler (34) an einen Eingang eines ersten Komparators (35) angelegt ist, an dessen anderem Eingang die an dem Akkumulatoranschluß (24) vorliegende Spannung anliegt.

4. Schaltungsvorrichtung nach Anspruch 2 oder 3, wobei das Ausgangssignal der Komparatorschaltung (34, 35) direkt an den ersten Signalgeber (36) und über einen Widerstand (38) an die Ladestrombegrenzungsschaltung (40, 42) angelegt ist.

5. Schaltungsvorrichtung nach einem der vorhergehenden Ansprüche, wobei eine parallel zum Akkumulator (20) bzw. zur Akkumulatorzelle geschaltete Nebenschlußleitung (40, 42) mit veränderbarem Widerstand (41) als Ladestrombegrenzungsschaltung vorgesehen ist.

6. Schaltungsvorrichtung nach Anspruch 5, wobei die Nebenschlußleitung (40, 42) einen Widerstand (42) und ein damit in Reihe geschaltetes Regelbauteil (40) mit Ansteuerschaltung aufweist, dessen Steuereingang (39) in Abhängigkeit vom Temperatursignal beaufschlagt ist.

7. Schaltungsvorrichtung nach Anspruch 6, wobei als Regelbauteil mit Ansteuerschaltung ein Leistungstransistor, insbesondere ein Leistungsfeldeffekttransistor (40) vorgesehen ist.

8. Schaltungsvorrichtung nach Anspruch 5, 6 oder 7, wobei jedes Überwachungsmodul (21) eine mit einem zweiten Signalgeber (46) verbundene überstromschutzschaltung (43, 44, 45) aufweist, wobei die Ausgänge (11, 12) der zweiten Signalgeber (46) mit einer zweiten Steuersignalschaltung (30) verbunden sind, deren Ausgangssignal an die Ladestromquelle (28) angelegt ist.

9. Schaltungsvorrichtung nach Anspruch 8, wobei die Überstromschutzschaltung einen Komparator (44) umfaßt, an dessen einem Eingang ein dem Strom in der Nebenschlußleitung (40, 42) entsprechendes Spannungssignal und an dessen anderen Eingang ein Referenzsignal angelegt ist.

10. Schaltungsvorrichtung zur Lade- und Entladeüberwachung für zumindest zwei miteinander in Reihe an einer Ladestromquelle angeschlossene elektrische Akkumulatoren (20) oder Akkumulatorzellen nach einem der vorhergehenen Ansprüche, wobei jedes Überwachungsmodul (21) eine dritte Komparatorschaltung (49, 51, 52) aufweist, an die die am Akkumulatoranschluß (24) vorliegende Spannung angelegt ist und deren Ausgangssignal einen Signalgeber (46) beaufschlagt.

11. Schaltungsvorrichtung nach Anspruch 10, wobei die Komparatorschaltung einen zwischen dem positiven und dem negativen Anschluß (24 bzw. 25) des Akkumulators (20) bzw. der Akkumulatorzelle liegenden Spannungsteiler (49) aufweist, dessen Mittelabgriff (50) mit einem Eingang eines Komparators (51) verbunden ist, an dessen anderen Eingang ein Referenzsignal anliegt.

12. Schaltungsvorrichtung nach Anspruch 10 oder 11, wobei das Ausgangssignal der von der dritten Komparatorschaltung beaufschlagten Signalgeber (46, 56) über eine entsprechende Steuersignalschaltung (30) an eine Entladeüberwachungsschaltung (32) angelegt ist.

13. Schaltungsvorrichtung nach einem der vorhergehenden Ansprüche, wobei die Signalgeber (36, 46, 56) als galvanisch trennende Signalgeber ausgebildet sind.

14. Schaltungsvorrichtung nach Anspruch 13, wobei die Signalgeber als Phototransistoren (37, 47) aufweisende Optokoppler (36, 46) ausgebildet sind, und wobei die Kollektor-Emitter-Strecken der Phototransistoren (37, 47) mit der jeweiligen Steuersignalschaltung (29, 30) verbunden sind.

15. Schaltungsvorrichtung nach Anspruch 14, wobei jeweils ein gewichteter Widerstand (48) mit der Kollektor-Emitter-Strecke des jeweiligen Phototransistors (47) der zweiten Signalgeber (46) in Reihe geschaltet ist.

16. Schaltungsvorrichtung nach einem der vorhergehenden Ansprüche, wobei die jeweilige Steuersignalschaltung (29, 30) eine Logikschaltung, vorzugsweise eine fest verdrahtete Logikschaltung ist.

17. Schaltungsvorrichtung nach Anspruch 4 bis 16, wobei die zweite Steuerschaltung (30) eine ODER-Schaltung ist.

## Claims

1. Circuit apparatus for monitoring the charging of at least two electrical accumulators (20) or accumulator cells connected to one another in series with a charging current source (28), the apparatus comprising one monitoring module (21) for each accumulator (20) or for each accumulator cell to be monitored, with each monitoring module (21) having a charging current limitation circuit (40, 42) and a first signal generator (36) for displaying the state of operation of the charging current limitation circuit (40, 42), and further comprising a control signal circuit (29) connected to the first signal generators (36), with the output signal of the control signal circuit being applied to the charging current source (28) in order to control the charging current delivered by it, characterised in that the charging current limitation circuit (40, 42) is acted on in dependence on a temperature signal corresponding to the temperature of the accumulator (20) or of the accumulator cell, and in that the control signal circuit (29) is an AND-circuit.

2. Circuit apparatus in accordance with claim 1, wherein a first comparator circuit (34, 35) is associated with each charging current limitation circuit (40, 42), with the temperature signal and the potential present at an accumulator terminal (24) being supplied to the comparator circuit.

3. Circuit apparatus in accordance with claim 2, wherein the temperature signal is applied to one input of a first comparator (35) via a temperature-voltage converter (34), with the potential present at the accumulator terminal (24) being applied to the other input of the first comparator.

4. Circuit apparatus in accordance with claim 2 or claim 3, wherein the output signal of the comparator circuit (34, 35) is directly applied to the first signal generator (36) and is applied to the charging current limitation circuit (40, 42) via a resistor (38).

5. Circuit apparatus in accordance with any one of the preceding claims, wherein a bypass line (40, 42) with a variable resistance (41) is connected in parallel to the accumulator (20) or to the accumulator cell as the charging current limitation circuit.

6. Circuit apparatus in accordance with claim 5, wherein the bypass line (40, 42) has a resistor (42) and connected in series therewith a regulating component (40) with a control circuit, the control input (39) of which is acted on in dependence on the temperature signal.

7. Circuit apparatus in accordance with claim 6, wherein a power transistor with a control circuit, in particular a field-effect power transistor (40), is provided as the regulating component.

8. Circuit apparatus in accordance with claim 5, claim 6 or claim 7, wherein each monitoring module (21) has an overcurrent protection circuit (43, 44, 45) connected to a second signal generator (46), with the outputs (11, 12) of the second signal generators (46) being connected to a second control signal circuit (30), the output signal of which is applied to the charging current source (28).

9. Circuit apparatus in accordance with claim 8, wherein the overcurrent protection circuit includes a comparator (44) to the one input of which there is applied a voltage signal corresponding to the current in the bypass line (40, 42) and to the other input of which there is applied a reference signal.

10. Circuit apparatus for the charge and discharge monitoring of at least two electrical accumulators (20) or accumulator cells connected to one another in series with a charging current source in accordance with claim 1, wherein each monitoring module (21) has a third comparator circuit (49, 51, 52) to which the voltage present at the accumulator terminal (24) is applied and the output signal of which acts on a signal generator (46).

11. Circuit apparatus in accordance with claim 10, wherein the comparator circuit has a potential divider (49) lying between the positive and the negative terminals (24 and 25 respectively) of the accumulator (20) or of the accumulator cell, with the central tap (50) of the potential divider being connected to one input of a comparator (51), and with a reference signal being applied to the other input of the comparator (51).

12. Circuit apparatus in accordance with claim 10 or claim 11, wherein the output signal of the signal generator (46, 56) acted on by the third comparator circuit is applied via a corresponding control signal circuit (31) to a discharge monitoring circuit (32).

13. Circuit apparatus in accordance with one of the preceding claims, wherein the signal generators (36, 46, 56) are formed as galvanically separating signal generators.

14. Circuit apparatus in accordance with claim 13, wherein the signal generators are formed as optic couplers (36, 46) having phototransistors (37, 47), and wherein the collector-emitter paths of the phototransistors (37, 47) are connected with the respective control signal circuit (29, 30).

15. Circuit apparatus in accordance with claim 14, wherein in each case a weighted resistor (48) is connected in series with the collector-emitter path of the respective phototransistor (47) of the second signal generator (46).

16. Circuit apparatus in accordance with one of the preceding claims, wherein the respective control signal circuit (29, 30) is a logic circuit, preferably a hard-wired logic circuit.

17. Circuit apparatus in accordance with claim 4 to claim 16, wherein the second control circuit (30) is an OR-circuit.

## Revendications

1. Dispositif de commutation pour la surveillance de charge pour au moins deux accumulateurs (20) ou cellules d'accumulateur électriques branchés en série sur une source de courant de charge (28), comprenant chacun un module de surveillance (21) pour chaque accumulateur (20) à surveiller ou pour chaque cellule d'accumulateur, chaque module de surveillance (21) présentant un circuit de limitation du courant de charge (40, 42) et un premier générateur de signaux (36) pour indiquer l'état de fonctionnement du circuit de limitation du courant de charge (40, 42), et comprenant un circuit de signal de commande (29) relié aux premiers générateurs de signaux (36), le signal de sortie dudit circuit de signal de commande étant appliqué à la source de courant de charge (28) pour commander le courant de charge fourni par celle-ci, dans lequel le circuit de limitation du courant de charge (40, 42) est alimenté en fonction d'un signal de température correspondant à la température de l'accumulateur (20) ou de la cellule d'accumulateur, et en ce que le circuit de signal de commande (29) est un circuit ET.

2. Dispositif de commutation selon la revendication 1, dans lequel à chaque circuit de limitation du courant de charge (40, 42) est associé un premier circuit de comparaison (34, 35) auquel est amené le signal de température et la tension appliquée à une borne d'accumulateur (24).

3. Dispositif de commutation selon la revendication 2, dans lequel le signal de température est appliqué par l'intermédiaire d'un transducteur (34) de température et tension à une entrée d'un premier comparateur (35) à l'autre entrée duquel est appliquée la tension se trouvant à la borne d'accumulateur (24).

4. Dispositif de commutation selon l'une ou l'autre des revendications 2 et 3, dans lequel le signal de sortie du circuit de comparaison (34, 35) est directement appliqué au premier générateur de signaux (36) et au circuit de limitation du courant de charge (40, 42) par l'intermédiaire d'une résistance (38).

5. Dispositif de commutation selon l'une quelconque des revendications précédentes, dans lequel une conduite en dérivation (40, 42) branchée en parallèle à l'accumulateur (20) ou à la cellule d'accumulateur est prévue avec une résistance (41) variable en tant que circuit de limitation du courant de charge (40, 42).

6. Dispositif de commutation selon la revendication 5, dans lequel la conduite en dérivation (40, 42) présente une résistance (42) et un composant de réglage (40) avec circuit de pilotage, monté en série avec cette résistance, dont l'entrée de commande (39) est alimentée en fonction du signal de température.

7. Dispositif de commutation selon la revendication 6, dans lequel en tant que composant de réglage avec circuit de pilotage, il est prévu un transistor de puissance, en particulier un transistor de puissance à effet de champ (40).

8. Dispositif de commutation selon la revendication 5, 6 ou 7, dans lequel chaque module de surveillance (21) présente un disjoncteur de protection de surcharge (43, 44, 45) relié au second générateur de signaux (46), les sorties (11, 12) du second générateur de signaux (46) étant reliées à un second circuit de signal de commande (30) dont le signal de sortie est appliqué à la source de courant de charge (28).

9. Dispositif de commutation selon la revendication 8, dans lequel le disjoncteur de protection de surcharge comprend un comparateur (44) à une entrée duquel est appliqué un signal de tension correspondant au courant se trouvant dans la conduite en dérivation (40, 42) et à l'autre entrée duquel est appliqué un signal de référence.

10. Dispositif de commutation pour la surveillance de charge et de décharge pour au moins deux accumulateurs (20) ou cellules d'accumulateur électriques branchés en série sur une source de courant de charge selon l'une quelconque des revendications précédentes, dans lequel chaque module de surveillance (21) présente un troisième circuit de comparaison (49, 51, 52) auquel est appliquée la tension présente à la borne d'accumulateur (24) et dont le signal de sortie alimente un générateur de signaux (46).

11. Dispositif de commutation selon la revendication 10, dans lequel le circuit de comparaison présente un diviseur de tension (49) situé entre la borne positive (24) et le borne négative (25) de l'accumulateur (20) ou de la cellule d'accumulateur, dont la prise moyenne (50) est reliée à une entrée du comparateur (51), à l'autre entrée duquel est appliqué un signal de référence.

12. Dispositif de commutation selon l'une ou l'autre des revendications 10 et 11, dans lequel le signal de sortie des générateurs de signaux (46, 56) alimentés par le troisième circuit de comparaison, est appliqué à un circuit de surveillance de décharge (32) par l'intermédiaire d'un circuit de signal de commande (30) correspondant.

13. Dispositif de commutation selon l'une quelconque des revendications précédentes, dans lequel les générateurs de signaux (36, 46, 56) sont réalisés sous forme de générateurs de signaux à séparation galvanique.

14. Dispositif de commutation selon la revendication 13, dans lequel les générateurs de signaux sont réalisés sous forme d'optocoupleurs (36, 46) présentant des phototransistors (37, 47), et en ce que les sections collecteurs-émetteurs des phototransistors (37, 47) sont reliées avec le circuit de signal de commande (29, 30) respectif.

15. Dispositif de commutation selon la revendication 14, caractérisé en ce qu'une résistance (48) pondérée est branchée en série avec la section collecteur-émetteur du phototransistor (47) respectif des seconds générateurs de signaux (46).

16. Dispositif de commutation selon l'une quelconque des revendications précédentes, dans lequel le circuit de signal de commande (29, 30) respectif est un circuit logique, de préférence un circuit logique câblé.

17. Dispositif de commutation selon les revendications 4 à 16, dans lequel le second circuit de commande (30) est un circuit OU.
